# EUROPEAN PATENT APPLICATION

(11) **EP 4 742 759 A1**
(43) Date of publication of application: **13.05.2026**
(21) Application number: 24859578.7
(22) Date of filing: 21.08.2024
(51) Int. Cl.: H04W 36/28, H04W 56/00, H04W 72/231, H04W 72/0453, H04W 76/15

(54) **RADIO BASE STATION AND RADIO COMMUNICATION METHOD**

(30) Priority: 25.08.2023 JP 2023137298
(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2024/029708
(87) International publication number: WO 2025/047545

(57) **Abstract**

A radio base station receives from a candidate secondary node, connection information necessary for connection with the candidate secondary node when a terminal transitions between secondary nodes in accordance with mobility control by a lower layer, and transmits the received connection information to a transition source secondary node or to the terminal.

## Description

### Technical Field

The present disclosure relates to a radio base station and a radio communication method that support L1/L2 mobility.

### Background Art

3rd Generation Partnership Project (3GPP: registered trademark) is developing specifications for 5th generation mobile communication systems (5G, also referred to as New Radio (NR) or Next Generation (NG)), and is also developing specifications for next generation communication systems referred to as Beyond 5G, 5G Evolution, or 6G.

For example, in 3GPP Release 18, extension of layer 1/layer 2 mobility (L1/L2 mobility) is discussed. L1/L2 mobility is also referred to as Lower layer Triggered Mobility (LTM), corresponds to a technique related to mobility of a terminal (User Equipment, UE) in layer 1 or layer 2, and includes transition (handover (HO)) of the UE to another cell or the like (Non Patent Literature 1). The HO by L1/L2 mobility is realized by a lower layer such as a media access control layer (MAC).

Regarding such LTM, it has been discussed that during dual connectivity (DC) in which simultaneous communication is performed between the UE and each of two NG-RAN Nodes, Timing Advance (TA) for adjusting transmission timing of an uplink (UL), TCI (Transmission Configuration Indication) state of a target cell, and information (connection information) on an active bandwidth part (BWP) should be provided to the UE (Non Patent Literature 1).

### Citation List

### Non-Patent Literature

Non-Patent Literature 1: "Signalling approaches for LTM cell switch execution", R2-2308438, 3GPP TSG-RAN WG2 Meeting #123, 3GPP, August, 2023.

### Summary of Invention

However, in the case of LTM (Inter-SN LTM) between secondary nodes (SNs), there is a problem that in the current LTM operation, the connection information of the target cell (candidate cell) described above cannot be provided from an SN to the UE. Further, in the case of Inter-SN LTM, there is also a problem that early TA acquisition for acquiring TA early cannot be performed.

Thus, in the case of Inter-SN LTM, there is a concern that appropriate mobility control cannot be performed depending on status of a candidate cell(s).

Therefore, the following disclosure has been made in view of such a situation, and an object of the disclosure is to provide a radio base station and a radio communication method capable of achieving appropriate mobility control depending on status of a candidate cell(s) and the like even in the case of Inter-SN LTM.

According to an aspect of the present disclosure, there is provided a radio base station (gNB 100) including: a receiving unit (handover processing unit 120) that receives from a candidate secondary node, connection information necessary for connection with the candidate secondary node when a terminal transitions between secondary nodes in accordance with mobility control by a lower layer; and a transmitting unit (handover processing unit 120) that transmits the received connection information to a transition source secondary node or to the terminal.

According to an aspect of the present disclosure, there is provided a terminal(UE 200) including: a receiving unit (handover execution unit 230) that receives from a radio base station, a start instruction that explicitly or implicitly instructs a start of monitoring of a specific execution condition used for mobility control by a lower layer; and a control unit (control unit 240) that starts monitoring of the execution condition based on the received start instruction.

### Brief Description of Drawings

[FIG. 1] FIG. 1 is an overall schematic configuration diagram of a radio communication system 10.
[FIG. 2] FIG. 2 is a diagram illustrating an example of control by L1/L2 mobility.
[FIG. 3] FIG. 3 is a functional block configuration diagram of a gNB 100.
[FIG. 4] FIG. 4 is a functional block configuration diagram of a UE 200.
[FIG. 5] FIG. 5 is a diagram illustrating an example (example 1) of communication sequence of Inter-SN LTM according to operation example 2.
[FIG. 6] FIG. 6 is a diagram illustrating an example (example 2) of the communication sequence of Inter-SN LTM according to operation example 2.
[FIG. 7] FIG. 7 is a diagram illustrating an example (example 1) of communication sequence of UE based LTM according to operation example 3.
[FIG. 8] FIG. 8 is a diagram illustrating an example (example 2) of the communication sequence of UE based LTM according to operation example 3.
[FIG. 9] FIG. 9 is a diagram illustrating an example of a hardware configuration of the gNB 100 and the UE 200.
[FIG. 10] FIG. 10 is a diagram illustrating a configuration example of a vehicle 2001.

### Description of Embodiments

Hereinafter, embodiments will be described with reference to the drawings. Note that the same functions and configurations are denoted by the same or similar reference numerals, and descriptions of the functions and configurations will be appropriately omitted.

### (1) Overall Schematic Configuration of Radio Communication System

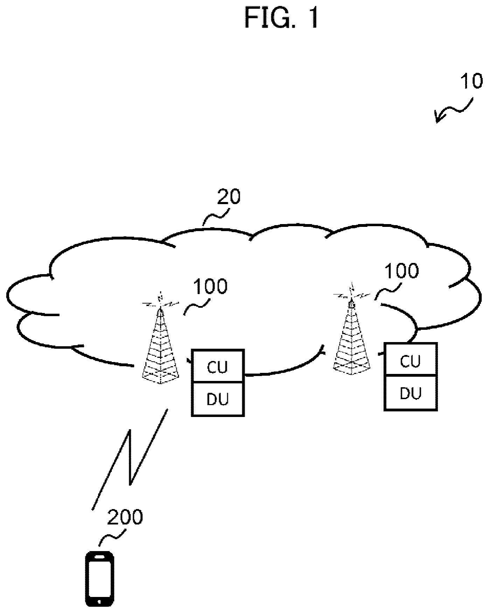

FIG. 1 is an overall schematic configuration diagram of a radio communication system 10 according to the present embodiment. The radio communication system 10 is a radio communication system according to 5G New Radio (NR), and includes a Next Generation-Radio Access Network 20 (hereinafter, NG-RAN 20) and a terminal 200 (User Equipment 200, hereinafter, UE 200).

Note that the radio communication system 10 may be a radio communication system according to a scheme referred to as Beyond 5G, 5G Evolution, or 6G, or may include a radio communication system according to a scheme referred to as Long Term Evolution (LTE) or 4G. The radio communication system 10 may support functions related to Industrial Internet of Things (IIoT) and URLLC (Ultra-Reliable and Low Latency Communications).

The NG-RAN 20 includes radio base stations 100 (hereinafter, gNBs 100). Note that the specific configuration of the radio communication system 10 including numbers of gNBs (which may be eNBs or the like) and UEs is not limited to the example illustrated in FIG. 1.

Further, the gNB 100 may adopt a fronthaul (FH) interface defined by O-RAN (Open Radio Access Network Alliance). The gNB 100 may include an O-DU (O-RAN Distributed unit) and an O-RU (O-RAN Radio Unit). The gNB 100 can function as a type of NG-RAN node.

The NG-RAN 20 actually includes a plurality of NG-RAN nodes, specifically, gNBs (or ng-eNBs), and is connected to a core network (5GC, not illustrated) according to 5G. The NG-RAN 20 and the 5GC may be simply expressed as a "network". In the 5GC, a concept of CUPS (Control and User Plane Separation) in which functions of a user plane and functions of a control plane are clearly separated may be introduced.

The gNB 100 is a radio base station according to the NR, and executes radio communication according to the NR with the UE 200. Note that the gNB 100 may include a CU (Central Unit) and a DU (Distributed Unit), and the DU may be provided at a geographically different place by being separated from the CU. One or a plurality of DUs may be connected to the CU. In addition, the gNBs (gNB-CUs) 100 may be connected by an Xn interface, and the CU and the DU may be connected by an F1 interface (F1-AP or the like).

The gNB 100 and the UE 200 can support massive MIMO that generates beams with higher directivity by controlling radio signals to be transmitted from a plurality of antenna elements, carrier aggregation (CA) that uses a plurality of component carriers (CC) in a bundle, dual connectivity (DC) that simultaneously performs communication between the UE and each of a plurality of NG-RAN nodes, and the like.

In the present embodiment, a type of the DC may be Multi-RAT Dual Connectivity (MR-DC) using a plurality of radio access technologies, or NR-NR Dual Connectivity (NR-DC) using only the NR. For example, any of gNBs may configure a master node (MN) and one or more other gNBs may configure a secondary node(s) (SN(s)).

In the radio communication system 10, not only mobility control (which may be referred to as L3 mobility) of the UE 200 in layer 3 but also mobility control (which may be referred to as L1/L2 mobility or LTM) in layer 1 and/or layer 2 may be applied. L3 mobility may be interpreted as mobility control in a radio resource control layer (RRC). On the other hand, L1/L2 mobility may be interpreted as mobility control (mobility control by a lower layer) in a physical layer (PHY), a medium access control layer (MAC), a radio link control layer (RLC), and a packet data convergence protocol layer (PDCP).

Further, in UE-initiated LTM (UE based LTM), similar to Conditional Handover (CHO), the UE may monitor a state according to a specific execution condition after receiving the execution condition from the radio base station (gNB). If the execution condition is satisfied, the UE may then execute LTM.

The mobility of the UE 200 may mean ease of movement and movability of the UE 200 in a broad sense, but in the present embodiment, may mean minimizing a call drop, a failure in a radio link (including beams), unnecessary handover, a ping-pong state, and the like.

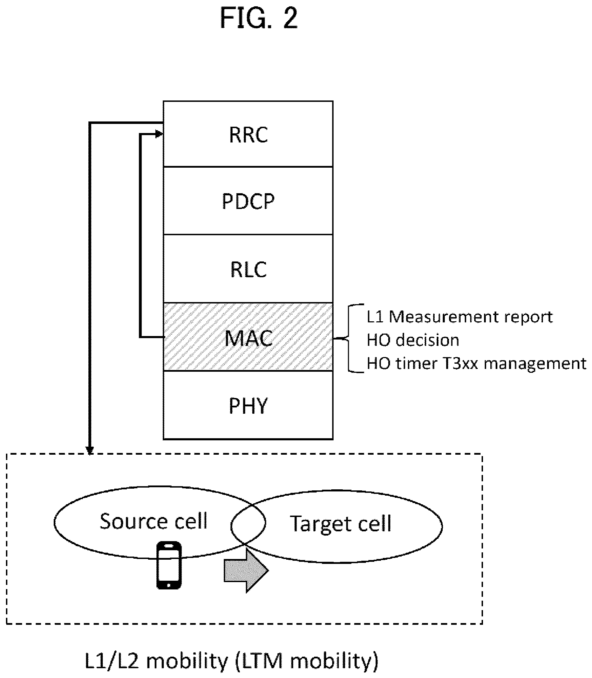

FIG. 2 illustrates an example of control by L1/L2 mobility. As illustrated in FIG. 2, the MAC, which is included in a lower layer (layer 1/layer 2), rather than the RRC included in the layer 3, can execute a measurement report, a handover (HO) decision from a source cell to a target cell (which may include a candidate), and a management of a timer (denoted here as T3xx for convenience) that determines HO success or failure. The T3xx may be interpreted as a timer set for the same purpose as a timer T304 in L3, that is, a timer used to determine the success or failure of HO (cell transition).

The MAC may report information regarding the measurement report, the HO decision, and the T3xx to an upper layer (RRC). The RRC may manage a state of radio resources associated with cell transition of UE200 based on the report.

In the present embodiment, channels include a control channel and a data channel. The control channel includes PDCCH (Physical Downlink Control Channel), PUCCH (Physical Uplink Control Channel), PRACH (Physical Random Access Channel), PBCH (Physical Broadcast Channel), and the like.

The data channel includes PDSCH (Physical Downlink Shared Channel), PUSCH (Physical Uplink Shared Channel), and the like.

Note that a reference signal includes Demodulation reference signal (DMRS), Sounding Reference Signal (SRS), Phase Tracking Reference Signal (PTRS), Channel State Information-Reference Signal (CSI-RS), and the like. A signal includes channels and reference signals. Data may mean data to be transmitted via a data channel.

### (2) Functional Block Configuration of Radio Communication System

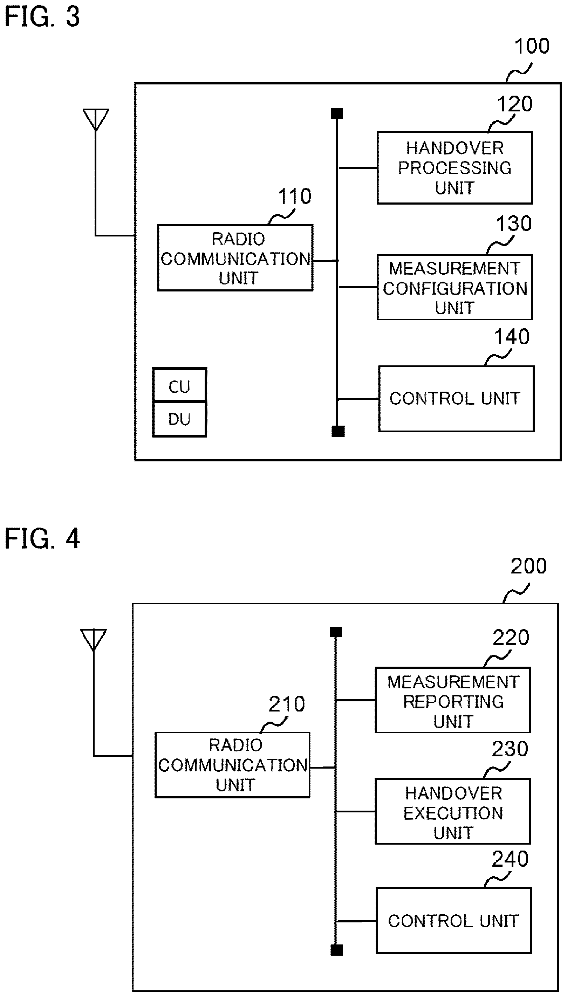

Next, a functional block configuration of the radio communication system 10 will be described. More specifically, functional block configurations of the gNB 100 and the UE 200 will be described. FIG. 3 is a functional block configuration diagram of the gNB 100. FIG. 4 is a functional block configuration diagram of the UE 200.

### (2.1) gNB 100

As illustrated in FIG. 3, the gNB 100 includes a radio communication unit 110, a handover processing unit 120, a measurement configuration unit 130, and a control unit 140.

The radio communication unit 110 transmits a downlink signal (DL signal) in accordance with NR. The radio communication unit 110 receives an uplink signal (UL signal) in accordance with NR.

A TCI state can provide information on an antenna port that is substantially quasi-collocated (QCL) with an antenna port of a PDCCH. When the UE 200 has a specific CORESET (control resource sets) that is spatially co-located with a specific CSI-RS, the UE 200 can determine which beam is appropriate when attempting to receive a PDCCH using the CORESET. Note that QCL/TCI state/beam may be mutually interchangeable.

The handover processing unit 120 executes a handover of the UE 200. More specifically, the handover processing unit 120 executes a handover from a serving cell of the UE 200 to another neighboring cell.

Note that a serving cell may be simply interpreted as a cell to which the UE 200 is connected, but more strictly, in the case of a UE in RRC_CONNECTED in which a carrier aggregation (CA) is not configured, there is only one serving cell that constitutes a primary cell. In the case of a UE in RRC_CONNECTED configured using the CA, the serving cell may be interpreted as indicating a set of one or more cells including the primary cell and all secondary cells.

Further, the handover may include a conditional handover (CHO: Conditional Handover) and/or a DAPS (dual active protocol stack) handover. The CHO can execute a UE 200-initiated handover when a specific execution condition is satisfied. When the CHO cannot be applied, a normal handover may be executed (which may also be referred to as CHO recovery). In the CHO recovery, the UE 200 executes a cell selection after a CHO failure, but when a CHO candidate cell is selected, the UE 200 can directly apply the conditional RRCReconfiguration of the cell and reconnect without transmitting RRCReestablishmentRequest to the candidate target cell.

The execution condition may be configured by one or two trigger conditions (CHO events A3/A5 defined in 3GPP TS38.331). A single reference signal (RS) type is triggered, and up to two different trigger quantities (for example, Reference Signal Received Power (RSRP) and Reference Signal Received Quality (RSRQ), RSRP and Signal-to-Interference plus Noise power Ratio (SINR), etc.) may be configured simultaneously for evaluation of a CHO execution condition of a single candidate cell.

Further, when the gNB 100 is a master node (MN) (hereinafter the same), and the UE 200 transitions between secondary nodes in accordance with mobility control by a lower layer, specifically, L1/L2 Mobility (LTM), the handover processing unit 120 can receive connection information necessary for connection with a candidate secondary node (SN) from the candidate secondary node. In the present embodiment, the handover processing unit 120 may constitute a receiving unit that receives the connection information.

The handover processing unit 120 can also transmit the received connection information to a transition source secondary node or the UE 200. In the present embodiment, the handover processing unit 120 may constitute a transmitting unit that transmits the connection information.

A transition (handover) of a UE between candidate secondary nodes (each of which may also be referred to as a target secondary node, a target cell, a candidate cell, or the like) in accordance with LTM may be referred to as Inter-SN LTM.

The connection information necessary for connection with a candidate secondary node may be interpreted as information used for the UE 200 to connect to the candidate secondary node. For example, the connection information may include at least any one of an uplink (UL) timing adjustment value (TA: Timing Advance), a TCI state (transmission configuration indication), and an active bandwidth part (Active BWP) at the candidate secondary node.

Note that the handover processing unit 120 may transmit the connection information to the UE 200 using a control element (CE) of a medium access control layer (MAC). Alternatively, the handover processing unit 120 may transmit the connection information to the UE 200 by a message of a higher layer (for example, RRC). Further, the handover processing unit 120 may transmit the connection information to another SN or a master node (MN).

The handover processing unit 120 may receive a value of the TA from the candidate secondary node separately from the connection information. The expression "separately from the connection information" may mean receiving the value of the TA earlier than the connection information.

Further, the handover processing unit 120 may transmit to the UE 200 a start instruction that explicitly or implicitly instructs a start of monitoring of a specific execution condition used for L1/L2 Mobility (LTM).

The measurement configuration unit 130 executes configuration of quality measurement (measurement configuration) of a serving cell and a neighboring cell(s) by the UE 200. Specifically, the measurement configuration unit 130 may execute measurement configuration in the layer 3, or may execute measurement configuration in the layer 1 and/or the layer 2.

The measurement configuration unit 130 can notify the UE 200 of the content of the measurement configuration. The UE 200 may measure quality of the serving cell and/or the neighboring cell(s) based on the notified measurement configuration. The measurement configuration unit 130 can receive a measurement report indicating a measurement result of the cell quality from the UE 200.

The control unit 140 controls each functional block constituting the gNB 100. Particularly, in the present embodiment, the control unit 140 can execute mobility control with a terminal. More specifically, the control unit 140 can execute not only mobility control in accordance with L3 Mobility but also mobility control in accordance with L1/L2 Mobility (LTM).

Further, the control unit 140 can execute control as a CU (source side or target side) or a DU (source side or target side) in the gNB 100 having a CU-DU configuration.

### (2.2) UE 200

As illustrated in FIG. 4, the UE 200 includes a radio communication unit 210, a measurement reporting unit 220, a handover execution unit 230, and a control unit 240.

The radio communication unit 210 transmits an uplink signal (UL signal) in accordance with NR. Further, the radio communication unit 210 receives a uplink signal (DL signal) in accordance with NR.

The measurement reporting unit 220 can measure quality of a serving cell of the UE 200 and a neighbor cell(s) of the serving cell, and report a measurement result (Measurement Report) to a network. The measurement reporting unit 220 may execute measurement reporting of a source cell and a target cell during a handover.

The quality to be measured may be, for example, quality (for example, Reference Signal Received Power (RSRP), or Reference Signal Received Quality (RSRQ)) included in a Measurement Report defined in 3GPP TS38.331.

The handover execution unit 230 executes a handover of the UE 200. More specifically, the handover execution unit 230 may execute a handover to a transition destination cell (NG-RAN node) based on control by the gNB 100.

Further, the handover execution unit 230 can execute processing related to a normal handover (legacy handover), a conditional handover (CHO), and a DAPS handover.

In the case of the CHO, the handover execution unit 230 may transition to a candidate cell when an execution condition is satisfied. As described above, the execution condition may be determined based on quality of a reference signal (RS), more specifically, a value of RSRP, RSRQ, or SINR.

Further, in the CHO, a transition destination may not be accompanied by an SCG, or may be accompanied by an SCG. In other words, a transition destination cell by the CHO may be a single cell, or may be configured by a plurality of cells (which may also be referred to as a cell group) in accordance with DC.

Furthermore, the handover execution unit 230 may execute a handover based on L1/L2 Mobility as well as L3 Mobility. The handover may also be referred to as a transition, a cell transition, a cell selection, or the like. More specifically, the handover execution unit 230 may execute a handover based on L1/L2 Mobility, based on a command of at least one of layer 1 and/or layer 2.

The type of the command is not particularly limited, but may be, for example, an L1/L2 Mobility command. The L1/L2 Mobility command may also be referred to as another command of an RRC layer.

Further, the handover execution unit 230 may receive from the gNB 100 a start instruction that explicitly or implicitly instructs a start of monitoring of a specific execution condition used for L1/L2 Mobility (LTM). In the present embodiment, the handover execution unit 230 may constitute a receiving unit that receives a start instruction.

The handover execution unit 230 may receive configuration information related to L1/L2 Mobility (LTM). The configuration information may mean configuration related to LTM (LTM config). However, it does not necessarily have to be LTM config as long as it is content indicating configuration related to LTM (which may include execution condition, etc.).

The control unit 240 controls each functional block constituting the UE 200. More specifically, the control unit 240 can execute control related to registration of the UE 200 to a network (standby in a specific cell), measurement report, and handover of the UE 200.

Further, the control unit 240 can execute L1/L2 Mobility, that is, mobility control of at least any one of the layer 1 and the layer 2. Mobility control by L1/L2 Mobility may include a quality measurement of a service area and a neighboring cell(s) in the layer 1 or the layer 2, configuration of a transition destination candidate cell, a cell reselection (transition), a handover, and the like.

Particularly, in the present embodiment, the control unit 240 may start monitoring of an execution condition based on a monitoring start instruction for the execution condition received by the handover execution unit 230.

Further, after the handover execution unit 230 receives the configuration information, the control unit 240 may wait for reception of connection information necessary for connection with a candidate cell as a transition destination for a specific time (for example, n seconds or n minutes). As described above, the connection information may mean information used for the UE 200 to connect to a candidate secondary node.

When executing a random access procedure (RA procedure), the control unit 240 may start monitoring of the execution condition. Conversely, when not executing an RA procedure, the control unit 240 may not start monitoring of the execution condition, and may wait for notification of a TA value at a candidate secondary node from the gNB 100.

### (3) Operation of Radio Communication System

Next, an operation of the radio communication system 10 will be described. More specifically, an operation related to a handover between CU-DU using L1/L2 Mobility (LTM) will be described.

### (3.1) Premise

As described above, L1/L2 Mobility (LTM) also supports dual connectivity, and when Inter-SN LTM is executed, consideration has been made that the following information is to be provided. More specifically, it is considered that a serving DU needs to acquire in advance the following dynamic information from a target (candidate) DU regarding a target cell to be included in an LTM cell switching command.
(i) TA-related information
(ii) Index of TCI state of target cell
(iii) Active BWP of target cell

### (3.2) Operation Example 1

In Inter-SN LTM in dual connectivity, it is desirable that the information of (i) to (iii) as described above is finally provided from a candidate SN to a UE. Further, information related to a Contention Free RACH (CFRA) resource (for example, the CFRA resource and/or an index indicating the CFRA resource) may be included in the information.

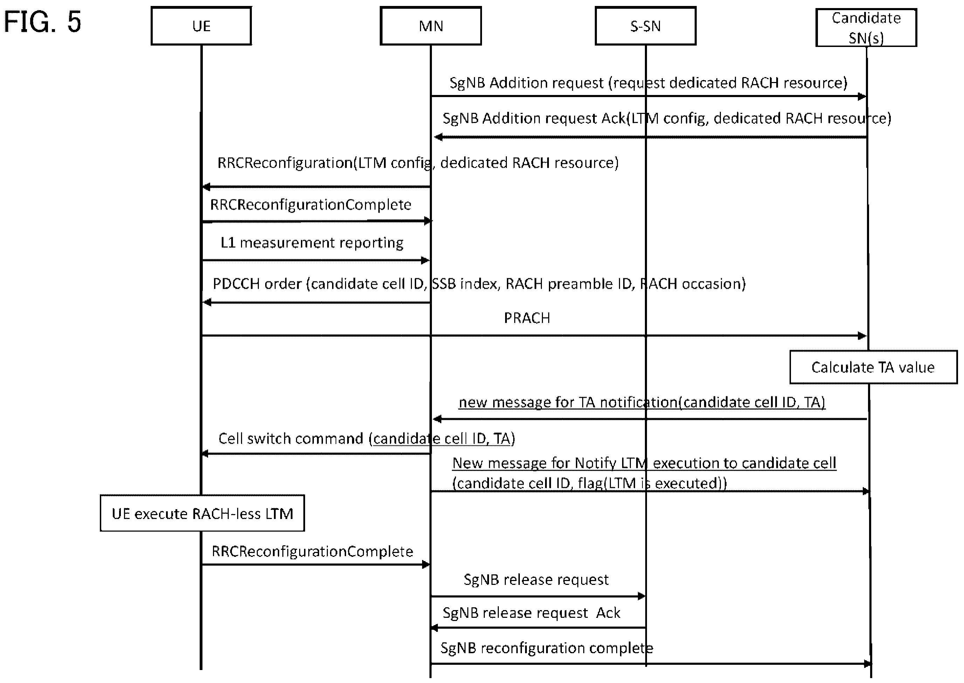

Therefore, in the present operation example, in MN initiated inter-SN LTM or SN initiated inter-SN LTM, when the MN transmits an SgNB addition request message (see FIG. 5, etc.) or an SgNB modification request to a candidate target SN, the MN may request transmission of dynamic info (a candidate cell ID, a dedicated RACH resource (may include a CFRA resource or an index indicating the CFRA resource), a TCI state index(es) for a target cell, and an active BWP for a target cell).

When the Candidate Target SN returns an SN addition request acknowledge message or an SgNB modification request Ack message to the MN, the Candidate Target SN may include info (a candidate cell ID, a dedicated RACH resource (may include a CFRA resource or an index indicating the CFRA resource), a TCI state index(es) for a target cell, and an active BWP for a target cell) in response to the request from the MN.

The MN may transmit dynamic info (a candidate cell ID, a TA value, a TCI state index(es) for a target cell, an active BWP for a target cell, and a CFRA resource or an index indicating the CFRA resource) to the UE using a MAC CE (for example, a cell switch command MAC CE).

Note that the information to be included in the dynamic info does not necessarily have to include all of information elements described above, and only some information elements may be subject to transmission.

Further, the MN may transmit the dynamic info (a candidate cell ID, a TA value, a TCI state index(es) for a target cell, an active BWP for a target cell, and a CFRA resource or an index indicating the CFRA resource) to a source SN.

The source SN may transmit dynamic info (a candidate cell ID, a TA value, a TCI state index(es) for a target cell, an active BWP for a target cell, and a CFRA resource or an index indicating the CFRA resource) to the UE using the MAC CE (for example, the cell switch command MAC CE).

According to the present operation example, since dynamic info (a candidate cell ID, a TA value, a TCI state index(es) for a target cell, an active BWP for a target cell, and a CFRA resource or an index indicating the CFRA resource) is provided to the source SN and the UE, appropriate mobility control according to a situation of a candidate cell or the like can be realized even in the case of Inter-SN LTM.

### (3.3) Operation Example 2

In the case of Inter-SN LTM in dual connectivity, there is a problem that early TA acquisition, which enables early acquisition of a TA value, is difficult.

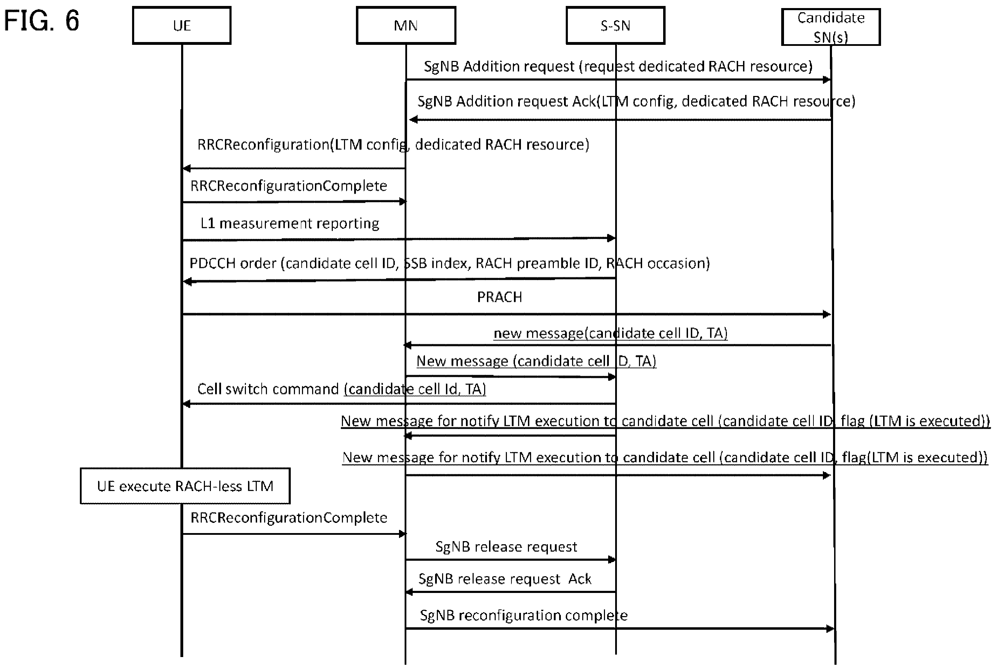

Therefore, in the present operation example, an example of communication sequence that can solve such a problem will be described. FIG. 5 illustrates an example (example 1) of communication sequence of Inter-SN LTM according to operation Example 2. FIG. 6 illustrates an example (example 2) of communication sequence of Inter-SN LTM according to operation Example 2.

### (3.3.1) Example 1

As illustrated in FIG. 5, the UE may transmit an L1 measurement report to the MN. The MN may determine a cell(s) for which early TA acquisition needs to be performed, from among candidate SN cells with good quality. The MN transmits a PDCCH order (a candidate cell ID, an SSB index, a RACH preamble ID, and a RACH occasion) to the UE.

The UE transmits a PRACH to the candidate SN cell. The Candidate SN may calculate a TA value and transmit the calculated TA value to the MN (see an underlined portion in FIG. 5).

The MN may transmit a candidate cell ID and a TA to the UE using a cell switch command MAC CE. Further, the MN may notify the candidate cell of LTM execution.

The UE may execute RACH-less LTM and transmit RRCReconfigurationComplete to the MN.

### (3.3.2) Example 2

As illustarted in FIG. 6, the UE may transmit an L1 measurement report to the source SN. The source SN may determine a cell(s) for which early TA acquisition needs to be performed, from among candidate SN cells with good quality. The source SN transmits a PDCCH order (a candidate cell ID, an SSB index, a RACH preamble ID, and a RACH occasion) to the UE.

The UE transmits a PRACH to the candidate SN cell. The Candidate SN may calculate a TA value and transmit the calculated TA value to the MN (see an underlined portion in FIG. 6). The MN may transmit the TA value to the source SN.

The Source SN may transmit a candidate cell ID and a TA to the UE using the cell switch command MAC CE. Further, the Source SN may notify the MN of LTM execution, and the MN may notify the candidate SN of LTM execution.

The UE may execute RACH-less LTM and transmit RRCReconfigurationComplete to the MN.

According to the present operation example, since a TA value of a candidate SN cell with good quality is provided to the UE, appropriate mobility control according to the situation of a candidate cell or the like can be realized even in the case of Inter-SN LTM.

### (3.4) Operation Example 3

As described above, in UE based LTM, like Conditional HO, when a UE receives an execution condition from a gNB, the UE monitors the execution condition, and when the execution condition is satisfied, the UE executes LTM.

In the conventional Conditional HO, a UE immediately starts monitoring an execution condition after receiving the execution condition. However, in the case of UE based LTM, there is a possibility that dynamic info (a TA, a TCI state index for the target cell, an active DL/UL BWP for the target cell, etc.) may be provided from a network to the UE. Therefore, if the UE immediately starts monitoring the execution condition, there is a possibility that information indicating a TA, a TCI state index for the target cell, and an active DL/UL BWP for the target cell cannot be acquired.

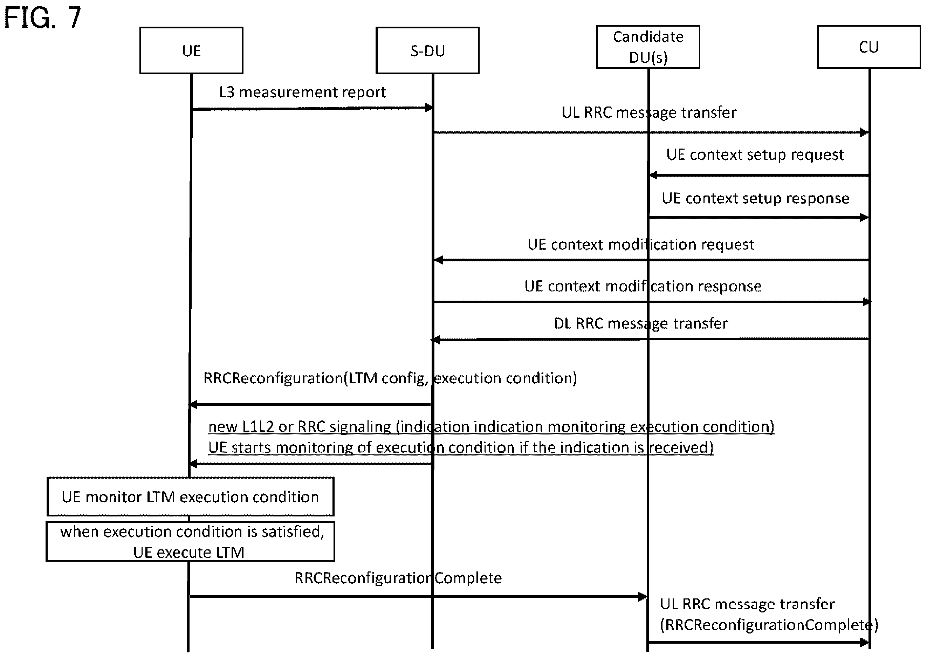

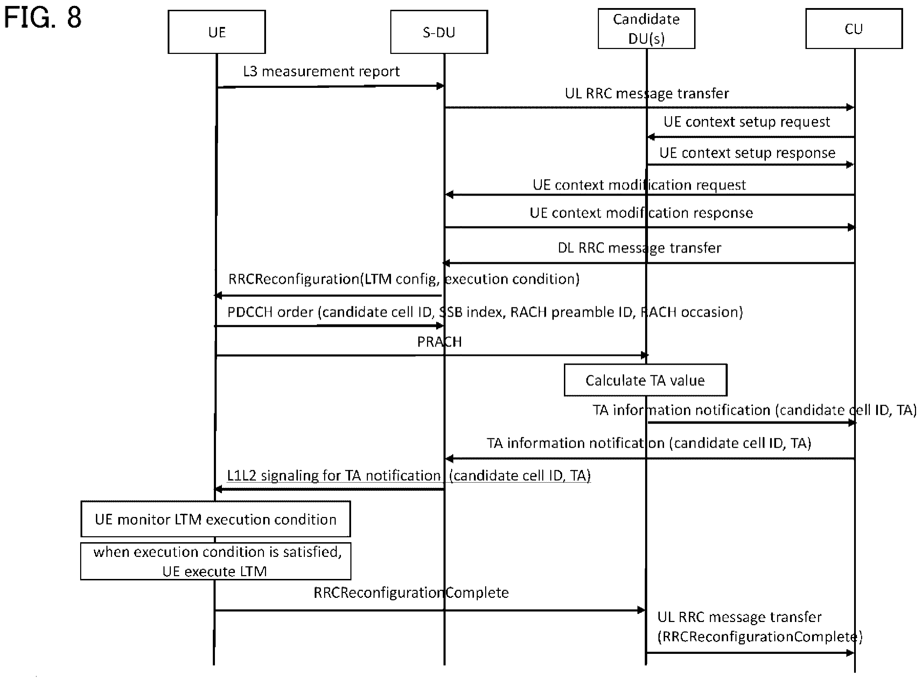

Therefore, in the present operation example, an example of communication sequence that can solve such a problem will be described. FIG. 7 illustrates an example (example 1) of communication sequence of UE based LTM according to operation example 3. FIG. 8 illustrates an example (example 2) of communication sequence of UE based LTM according to operation example 3.

As illustrated in FIG. 7 or FIG. 8, the gNB may transmit an instruction indicating monitoring start of an execution condition to the UE. The instruction may be performed by L1 or L2 signaling or an RRC message (see FIG. 7).

The instruction may be explicit (for example, one bit may be used to indicate to start monitoring or not to monitor an execution condition). After receiving the instruction to start monitoring the execution condition, the UE may immediately start monitoring the execution condition.

Alternatively, the instruction may be implicit. After receiving a MAC CE including dynamic info (for example, any of a TA, a TCI state index for the target cell, an active DL/UL BWP for the target cell, and a CFRA resource or an index indicating the CFRA resource may be included), the UE may implicitly start monitoring the execution condition. The UE does not need to start monitoring the execution condition before receiving the dynamic info (see FIG. 8).

Alternatively, after receiving an LTM config by an RRC message, the UE may start a timer (which may be a new timer). While the timer is running, the UE may wait for reception of dynamic info (a TA, a TCI state an index for the target cell, an active DL/UL BWP for the target cell, and a CFRA resource or an index indicating the CFRA resource) from the gNB. The UE does not need to start monitoring the execution condition while the timer is running. The UE may start monitoring the execution condition when the timer expires.

Alternatively, the gNB may transmit an instruction indicating to the UE to execute LTM by RACH or RACH-less. When executing RACH, monitoring of the execution condition may be started. Conversely, in the case of RACH-less, the UE may wait for notification of a TA value from the gNB. After receiving the TA value, the UE may implicitly start monitoring the execution condition.

Alternatively, after receiving an execution condition by an RRC message, the UE may immediately start monitoring the execution condition. While monitoring the execution condition (the execution condition is not yet satisfied), the UE may wait for or receive dynamic info (any of a TA, a TCI state index for the target cell, an active DL/UL BWP for the target cell, and a CFRA resource or an index indicating the CFRA resource) from the gNB.

When the execution condition is satisfied and the UE does not have (does not receive) dynamic info (any of a TA, a TCI state index for the target cell, an active DL/UL BWP for the target cell, and a CFRA resource or an index indicating the CFRA resource), the UE may execute LTM.

According to the present operation example, since a start instruction for execution condition monitoring is transmitted explicitly or implicitly from a network, the UE can monitor the execution condition at an appropriate timing and execute UE based LTM.

### (4) Other Embodiments

Although the content of the present proposal has been described above with reference to examples, the present proposal is not limited to these descriptions, and it is obvious to those skilled in the art that various modifications and improvements can be made.

For example, in the above description, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-individual may be read interchangeably. Similarly, common, shared, group-common, UE-common, and UE-shared may be read interchangeably.

Note that the block diagrams (Figs. 3 and 4) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting unit", a "transmitter", and the like. The method for implementing each component is not particularly limited as described above.

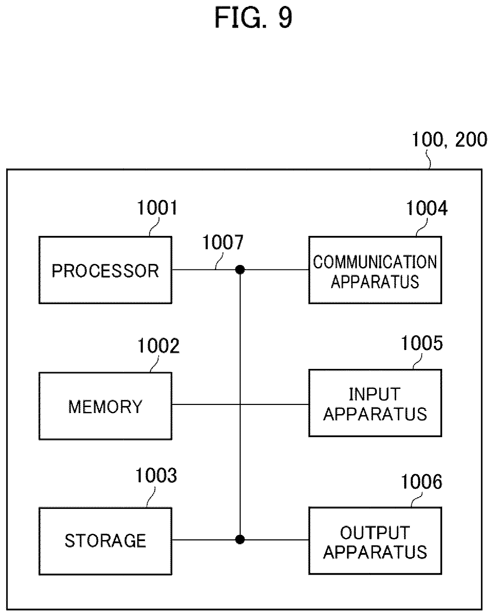

The gNB 100 and the UE 200 (the apparatuses) which are described above may function as a computer that executes the processes of the radio communication method of the present disclosure. FIG. 9 is a diagram to illustrate an example of a hardware structure of each of the apparatuses. As illustrated in FIG. 9, the apparatuses may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware structure of the apparatuses may be configured to include one or more of apparatuses shown in the drawings, or may be configured not to include part of apparatuses.

Each functional block of the apparatuses (see FIGS. 3 and 4) is implemented by any of hardware elements of the computer apparatus or a combination of the hardware elements.

Each function of the apparatuses is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The storage 1003 may be referred to as "auxiliary storage apparatus". The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the apparatuses may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB), and so on)), and other signals or combinations of these. Also, RRC signaling may be referred to as an "RRC message", and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, or combinations of these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with the base station, it is clear that various operations that are performed to communicate with the terminal can be performed by the base station, one or more network nodes (for example, MME, S-GW, and so on may be possible, but these are not limiting) other than the base station, or combinations of these. According to the above, a case is described in which there is a single network node other than the base station. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel or a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells (also called sectors). When the base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of the base station and a base station subsystem that provides communication services within this coverage.

In the present disclosure, the transmission of information from the base station to the terminal may be interpreted as the instruction of control or operation to the terminal based on the information by the base station.

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases.

At least one of the base station and the mobile station may be referred to as a "transmitting apparatus", a "receiving apparatus", a "radio communication apparatus", and so on. Note that at least one of the base station and the mobile station may be a device mounted on a moving object, a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a user station (user terminal, the same applies hereinafter). For example, each aspect/embodiment of the present disclosure may be applied to the structure that replaces a communication between the base station and the user station with a communication between a plurality of user stations (for example, which may be referred to as "Device-to-Device (D2D)", "Vehicle-to-Everything (V2X)", and the like). In this case, the user stations may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user station in the present disclosure may be interpreted as the base station. In this case, the base station may have the functions of the user station.

A radio frame may be constituted of one or a plurality of frames in the time domain. Each of one or a plurality of frames in the time domain may be referred to as a "subframe". Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, the base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain.

The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "SubCarrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

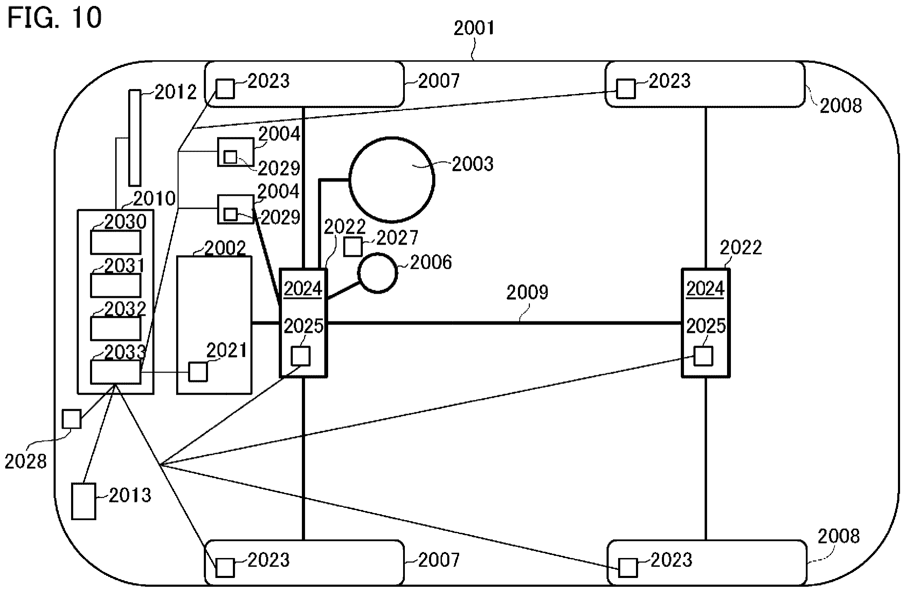

FIG. 10 illustrates an example of a configuration of a vehicle 2001. As illustrated in FIG. 10, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user. The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 1 by using information obtained from the external device through the communication module 2013 or the like.

The information service unit 2012 may include an input device that accepts an external input (e.g., keyboard, mice, microphone, switch, button sensor, touch panel, or the like), and may include an output device that performs an external output (e.g., display, speaker, LED lamp, touch panel, or the like).

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit to an external device through radio communication, at least one of signals from the above-described various sensors 2021 to 2028 which are input to the electronic control unit 2010, information obtained based on the signals, and information based on an input from external (user) which is obtained through the information service unit 2012. The electronic control unit 2010, the various sensors 2021 to 2028, the information service unit 2012 and the like may be referred to as input units which accept an input. For example, PUSCH to be transmitted by the communication module 2013 may include information based on the above-described input.

The communication module 2013 receives various types of information (traffic information, signal information, inter-vehicle information, etc.) transmitted from the external devices and displays the received information on the information service unit 2012 provided in the vehicle. The information service unit 2012 may be referred to as an output unit which outputs information (e.g., outputs information to a device such as a display, a speaker or the like based on PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2028, etc., mounted in the vehicle 2001.

As described above, the present disclosure has been described in detail. It is apparent to a person skilled in the art that the present disclosure is not limited to one or more embodiments of the present disclosure. Replacements and modifications of the present disclosure may be possible without departing from the subject matter and the scope of the present disclosure defined by the descriptions of claims. Therefore, the descriptions of the present disclosure are for illustrative purposes only, and are not intended to be limitations to the present disclosure.

### (Appendix)

The above-described disclosure may be represented as follows. A first feature is a radio base station including: a receiving unit that receives from a candidate secondary node, connection information necessary for connection with the candidate secondary node when a terminal transitions between secondary nodes in accordance with mobility control by a lower layer; and a transmitting unit that transmits the received connection information to a transition source secondary node or to the terminal.

For a second feature, in the first feature, the connection information includes at least any one of an uplink timing adjustment value, a transmission configuration indication, and an active bandwidth part in the candidate secondary node.

For a third feature, in the first or second feature, the transmitting unit transmits the connection information to the terminal using a control element of a medium access control layer.

For a fourth feature, in the first to third features, the receiving unit receives the timing adjustment value from the candidate secondary node separately from the connection information.

For a fifth feature, in the first to fourth features, the transmitting unit transmits to the candidate secondary node, information indicating that the terminal transitions to the candidate secondary node.

A sixth feature is a terminal including: a receiving unit that receives from a radio base station, a start instruction that explicitly or implicitly instructs a start of monitoring of a specific execution condition used for mobility control by a lower layer; and a control unit that starts monitoring of the execution condition based on the received start instruction.

For a seventh feature, in the sixth feature, the receiving unit receives configuration information related to the mobility control, and the control unit, after receiving the configuration information, waits for reception of connection information necessary for connection with a candidate cell as a transition destination for a specific time.

For an eighth feature, in the sixth or seventh feature, the control unit starts monitoring of the execution condition when executing a random access procedure.

### Explanation of Reference Numerals

- 10: radio communication system
- 20: NG-RAN
- 100: gNB
- 110: radio communication unit
- 120: handover processing unit
- 130: measurement configuration unit
- 140: control unit
- 200: UE
- 210: radio communication unit
- 220: measurement reporting unit
- 230: handover execution unit
- 240: control unit
- 1001: processor
- 1002: memory
- 1003: storage
- 1004: communication apparatus
- 1005: input apparatus
- 1006: output apparatus
- 1007: bus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A radio base station comprising:
a receiving unit that receives from a candidate secondary node, connection information necessary for connection with the candidate secondary node when a terminal transitions between secondary nodes in accordance with mobility control by a lower layer; and
a transmitting unit that transmits the received connection information to a transition source secondary node or to the terminal.

2. The radio base station according to claim 1, wherein the connection information includes at least any one of an uplink timing adjustment value, a transmission configuration indication, and an active bandwidth part in the candidate secondary node.

3. The radio base station according to claim 1, wherein the transmitting unit transmits the connection information to the terminal using a control element of a medium access control layer.

4. The radio base station according to claim 2, wherein the receiving unit receives the timing adjustment value from the candidate secondary node separately from the connection information.

5. The radio base station according to claim 4, wherein the transmitting unit transmits to the candidate secondary node, information indicating that the terminal transitions to the candidate secondary node.

6. A radio communication method in a master node, comprising:
a step of receiving from a candidate secondary node, connection information necessary for connection with the candidate secondary node when a terminal transitions between secondary nodes in accordance with mobility control by a lower layer; and
a step of transmitting the received connection information to a transition source secondary node or to the terminal.
